# EUROPEAN PATENT APPLICATION

(11) **EP 2 390 653 A1**
(43) Date of publication of application: **30.11.2011**
(21) Application number: 11167047.7
(22) Date of filing: 23.05.2011
(51) Int. Cl.: G01N 21/19, G01N 21/55

(54) **Circular dichroism spectrophotometric method and circular dichroism spectrophotometry apparatus using ATR method**

(30) Priority: 27.05.2010 JP 2010121496
(71) Applicant: Jasco Corporation, Hachioji-shi Tokyo 192-8537 (JP)
(72) Inventor: Kondo, Yoshiro, Tokyo (JP); Castiglioni, Ettore, 23891 Lombardia (IT)
(74) Representative: Henkel, Breuer & Partner

(57) **Abstract**

A simple method and apparatus for circular dichroism spectrophotometry are provided that allow a liquid, cream-type, and gel-type specimens (26) having a low degree of transparency to be measured directly and nondestructively without passing light through the specimens (26). Right-handed or left-handed circularly polarized light enters a prism (16) from an entrance face and hits a specimen mounting face of the prism (16), on which a specimen is placed, at an angle of 80°. Then, after being totally reflected by the specimen mounting face and going out from an exit face, the light is detected, and the absorbance is determined.

## Description

### FIELD OF THE INVENTION

The present invention relates to circular dichroism spectrophotometric methods and circular dichroism spectrophotometry apparatuses, and more specifically, to an improvement of a method and apparatus that allow strong solutions, gel-type and cream-type substances, and the like having a low degree of transparency to be measured directly and nondestructively.

### DESCRIPTION OF THE RELATED ART

In circular dichroism spectrophotometry, right-handed and left-handed circularly polarized light beams are directed to a specimen, and the difference in absorbance between them is measured. When a chiral substance is irradiated with right-handed and left-handed circularly polarized light, the two polarizations exhibit different degrees of absorbance. The difference in absorbance is referred to as circular dichroism and is used in circular dichroism spectrophotometry. Since the method is relatively simple, circular dichroism spectrophotometry has been widely used in three-dimensional molecular structural analysis.

If the strong solution or the cream-type or gel-type substance to be measured is insufficiently transparent to transmit light, it would be difficult to measure the solution or the substance directly. Formerly, the strong solution or the cream-type substance was diluted beforehand, and the gel-type substance, which does not dissolve in a solvent, was cut into thin slices beforehand, so that light can pass through.

The strong solution or the cream-type substance, however, may change its structure after it is diluted. Slicing the gel-type substance requires a great deal of labor and time, and some substances cannot be cut into thin slices. Therefore, it was difficult to measure the circular dichroism of such a solution or substance.
Accordingly, there has been demand for a simple method and apparatus for circular dichroism spectrophotometry that can measure strong solutions and cream-type and gel-type substances having a low degree of transparency directly and nondestructively.

### SUMMARY OF THE INVENTION

In view of the conventional technology described above, the present invention is provided to solve problems that make it difficult to measure the circular dichroism of materials having a low degree of transparency. The problems include a change in the structure of a strong solution or a cream-type substance, which may occur after the solution or the substance is diluted in preparation for circular dichroism spectrophotometry, and the workload of cutting a gel-type substance into thin slices. It is an object of the present invention to provide a simple method and apparatus for circular dichroism spectrophotometry that allow liquids and cream-type and gel-type substances having a low degree of transparency to be measured directly and nondestructively without passing light through the liquids and substances.

The inventors tested circular dichroism spectrophotometry using the attenuated total reflection (ATR) method instead of circular dichroism spectrophotometry involving transmitting light through the specimen.
In the ATR method, the absorption spectrum of a specimen surface is obtained by measuring total reflection light from the specimen surface. The specimen is held in close contact with the prism, and light is directed into the face on which the specimen is placed, through the prism. Since this light enters the specimen a little and then is reflected, the absorption spectrum of the specimen surface is obtained by measuring the reflected light.

An ATR circular dichroism spectrophotometry apparatus according to the present invention is structured as described below.
The circular dichroism spectrophotometry apparatus measures a circular dichroism spectrum by plotting the difference in absorbance between right-handed and left-handed circularly polarized light with respect to wavelength and includes a light source for emitting light; a monochromator for producing light having a predetermined wavelength from the light; a polarizer for producing linearly polarized light from light passing through the monochromator; a wave plate for converting light passing through the polarizer to right-handed or left-handed circularly polarized light; a prism having an entrance face through which light passing through the wave plate enters, a specimen mounting face on which a specimen is placed in close contact with the prism, and an exit face from which light reflected from the specimen mounting face goes out; and a light receiving element for receiving light leaving the exit face of the prism. The light passing through the polarizer enters the prism through the entrance face, and then hits the specimen mounting face at an angle greater than or equal to the critical angle.

In the ATR method, light must be totally reflected once from the specimen mounting face of the prism. There seems to be a possibility that light hitting the specimen mounting face at an angle greater than or equal to the critical angle would cancel out the light polarization state. However, the inventors confirmed, according to their experience, that the apparatus of the present invention can obtain a right circular dichroism spectrum.

A light incident angle ranging from 70° to 89° with respect to the specimen mounting face would be suited to practical use on the basis of experience.

When light enters the prism, it is necessary to keep the circular polarization as far as possible.
The polarization state can change when the light enters the prism. It is preferable that the prism be held as described below, to minimize the effect on the measurement result.

It is preferred that the prism be used in a tilted position such that, when the light passing through the polarizer enters the prism, the angle between the vibration direction of p-polarized light and the specimen mounting face become equal to the angle between the vibration direction of s-polarized light and the specimen mounting face.

The prism may also be used in a tilted position such that the light passing through the polarizer enters the prism perpendicularly through the entrance face.

According to the present invention, a circular dichroism spectrophotometric method for measuring a circular dichroism spectrum by plotting the difference in absorbance between right-handed and left-handed circularly polarized light with respect to wavelength includes the steps of placing a specimen on a specimen mounting face of a prism; and producing light having a predetermined wavelength by a monochromator from light emitted from a light source, producing linearly polarized light by a polarizer from light passing through the monochromator, converting light passing through the polarizer to right-handed or left-handed circularly polarized light by a wave plate, making light passing through the wave plate enter the prism through an entrance face of the prism and hit the specimen mounting face at an angle greater than or equal to the critical angle, making light reflected from the specimen mounting face go out of the prism through an exit face, and detecting outgoing light by a light receiving element to measure a circular dichroism spectrum.

A light incident angle ranging from 70° to 89° with respect to the specimen mounting face would be suited to practical use on the basis of experience.

It is preferred that the prism be used in a tilted position such that, when the light passing through the polarizer enters the prism, the angle between the vibration direction of p-polarized light and the specimen mounting face become equal to the angle between the vibration direction of s-polarized light and the specimen mounting face.

It is also preferred that the prism be used in a tilted position such that the light passing through the polarizer enters the prism perpendicularly through the entrance face.

As has been described above, the circular dichroism spectrophotometry apparatus according to the present invention determines circular dichroism not by measuring light passing through the specimen but by using the ATR method. In other words, the present invention uses light that slightly penetrates the specimen through the specimen mounting face of the prism, instead of light passing through the specimen. This method allows circular dichroism to be measured without diluting a strong solution or a cream-type substance or without cutting a gel-type substance into thin slices. Since the specimen placed on the specimen mounting face of the prism can be measured directly and nondestructively, the structure of the specimen can be maintained, and the workload on the observer can be reduced significantly
Since the circular dichroism spectrum measured by the method according to the present invention is almost the same as the spectrum measured by the conventional method, the method according to the present invention is suited to practical use.
The penetration depth of light can be adjusted by adjusting the incident angle of light with respect to the specimen mounting face.

The polarization state of the circularly polarized light entering the prism can be maintained by using the prism in a tilted position such that the light enters the prism perpendicularly from the entrance face.

Although light entering the prism perpendicularly is preferred, the penetration depth may be adjusted during measurement by changing the incident angle during measurement. In that case, since the light incident angle with respect to the specimen mounting face is adjusted later, light does not always need to enter the prism perpendicularly. When the prism is tilted to a position such that the angle between the vibration direction of p-polarized light and the specimen mounting face becomes equal to the angle between the vibration direction of s-polarized light and the specimen mounting face, the effect on the polarization state of light entering the prism will not affect the result of circular dichroism measurement as far as possible. Accordingly, the effect of disturbance of the polarization state of incident light on the measurement result is minimized.

### BRIEF DESCRIPTION OF THE DRAWINGS

Fig. 1 is a diagram showing the structure of a circular dichroism spectrophotometry apparatus of the present invention.
Fig. 2 illustrates the shape of a prism and the incident angle of light with respect to a specimen mounting face.
Fig. 3 illustrates the prism used in a tilted position such that, when light enters the prism, the angle between the vibration direction of p-polarized light and the specimen mounting face becomes equal to the angle between the vibration direction of s-polarized light and the specimen mounting face.
Fig. 4 illustrates adjustment of the light incident direction by using a total reflection prism.
Fig. 5 illustrates a gel-type specimen held on the prism by pressing.
Fig. 6 illustrates a specimen holding mold placed to keep a liquid specimen on the prism.
Fig. 7 illustrates a sponge saturated with a liquid specimen to be measured, placed on the prism.
Fig. 8 shows circular dichroism spectra obtained from a solution with a concentration of 0.0006 g/l in a conventional method.
Fig. 9 shows circular dichroism spectra obtained from a solution with a high concentration of 1.85 g/l in a method according to the present invention.

### DESCRIPTION OF THE PREFERRED EMBODIMENTS

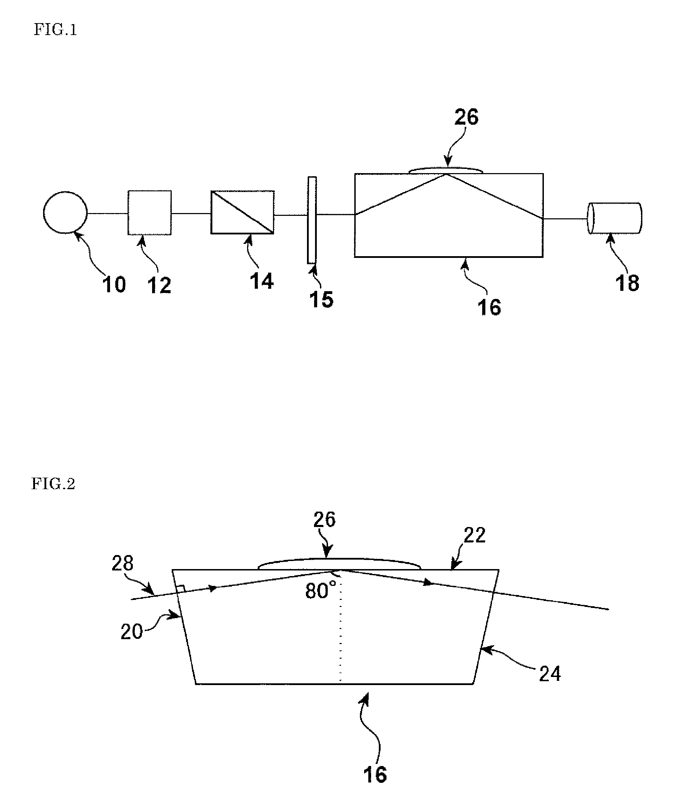

Fig. 1 shows the overall structure of an apparatus according to the present invention. A circular dischroism spectrophotometry apparatus according to the present invention includes a light source 10 for emitting ultraviolet light or visible light, a monochromator 12 disposed after the light source 10 for producing light having a predetermined wave length from the light emitted by the light source 10, a polarizer 14 for producing linearly polarized light from the light coming from the monochromator 12, a wave plate 15 for converting the light coming from the polarizer 14 to circularly polarized light, a prism 16 into which the light coming from the wave plate 15 enters, and a light receiving element 18 for receiving the light output from the prism 16. A gel-type specimen 26 is placed on the prism 16.

Light is emitted from the light source 10. When it passes through the monochromator 12, the light is converted to light having the predetermined wavelength. Then, when it passes through the polarizer 14, the light is converted to linearly polarized light. When it passes through the wave plate 15 disposed at a predetermined angle with respect to the polarizer 14, the light becomes right-handed or left-handed circularly polarized light. This light enters the prism 16 and is reflected from a side face of the prism 16. Outgoing light is detected by the light receiving element 18. In that way, absorbance is measured.
After the specimen 26 is placed on the prism 16, the orientation of the prism or the light traveling direction is adjusted to direct the light to the position of the specimen 26.
The light receiving element 18 is aligned with the position of the outgoing light.

### Shape and orientation of prism

Fig. 2 shows one preferable shape of the prism 16.
Light 28 enters the prism 16 from an entrance face 20. The most preferable incident angle for maintaining the polarization state of light is 90 degrees, as shown in Fig. 2. The prism 16 may also be used in a tilted position such that the angle between the vibration direction of the p-polarized light of the light 28 and a specimen mounting face 22 becomes equal to the angle between the vibration direction of the s-polarized light of the light 28 and the specimen mounting face 22, as described later.

The most preferable incident angle of the light 28 with respect to the entrance face 20 is 90 degrees because the effect on the polarization state of light entering the prism can be minimized at that angle, and consequently the circularly polarized state can be maintained.

The incident angle of light 28 on the specimen mounting face 22 may have to be adjusted later when it becomes necessary to adjust the penetration depth. If the incident angle were fixed to 90 degrees, the prism should be replaced with a prism of a suitable shape each time the adjustment is made. This replacement would impair the ease of use of the apparatus and would increase the workload of the observer.
Accordingly, the orientation of the prism 16 is adjusted appropriately, so that even if the light 28 hits the entrance face 20 of the prism 16 at an angle other than a right angle, the observed effect on the polarization state of the light 28 when it enters the prism 16 will be as little as possible in the circular dichroism spectrophotometry results.

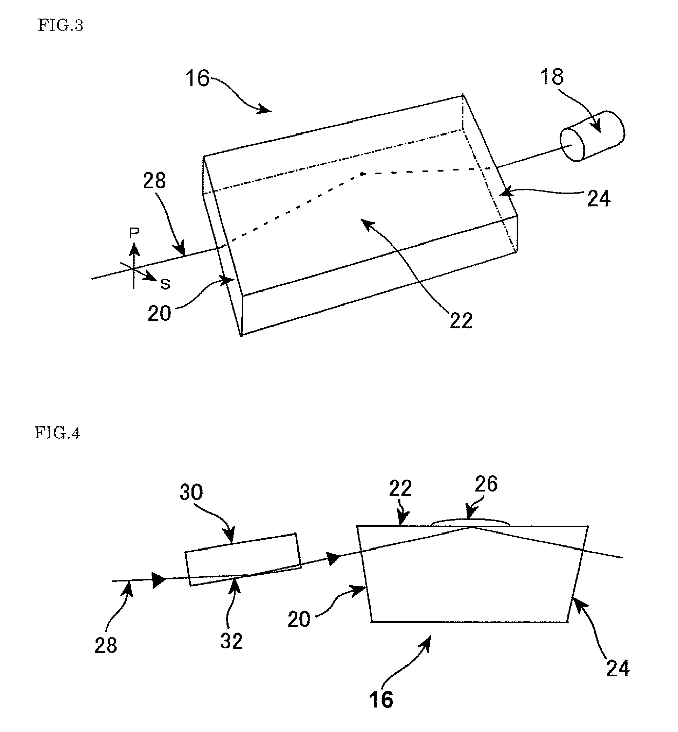

As shown in Fig. 3, for example, when the light 28 enters the prism 16, the prism 16 may be placed in a tilted position such that the angle between the vibration direction of the p-polarized light of the light 28 and the specimen mounting face 22 becomes equal to the angle between the vibration direction of the s-polarized light of the light 28 and the specimen mounting face 22. By doing that, the effect on the polarization state of the light 28 when it enters the prism 16 can be kept to about the same level as when the light 28 enters the prism 16 at a right angle. It is preferable that the prism 16 be tilted forward or backward by 45 degrees with respect to the sheet of the figure.

A rotary prism may also be used so that the incident angle at the specimen mounting face 22 can be changed later. If a two-axis type is used, it is possible to adjust the incident angle at the specimen mounting face, and the angle between p-polarized light and the specimen mounting face and the angle between s-polarized light and the specimen mounting face are equated.

In order to allow the sample to be held horizontally, adjustment of the incident angle of the light 28 to the prism is necessary, instead of adjustment of the orientation of the prism.
To adjust the incident angle of the light 28 to the prism 16, the traveling direction of the light 28 may be adjusted by directing the light 28 beforehand into a total reflection prism 30 and allowing it to bounce from a reflecting face 32. By adjusting the position and orientation of the total reflection prism 30, the incident angle of the light 28 to the specimen mounting face 22 can be adjusted, and consequently, the penetration depth dp into the specimen can be adjusted.

A preferable angle between the outgoing light and the exit face 24 of the prism 16 is 90 degrees especially when the effect of linear dichroism of the prism 16 is large.

### Specimen holding method

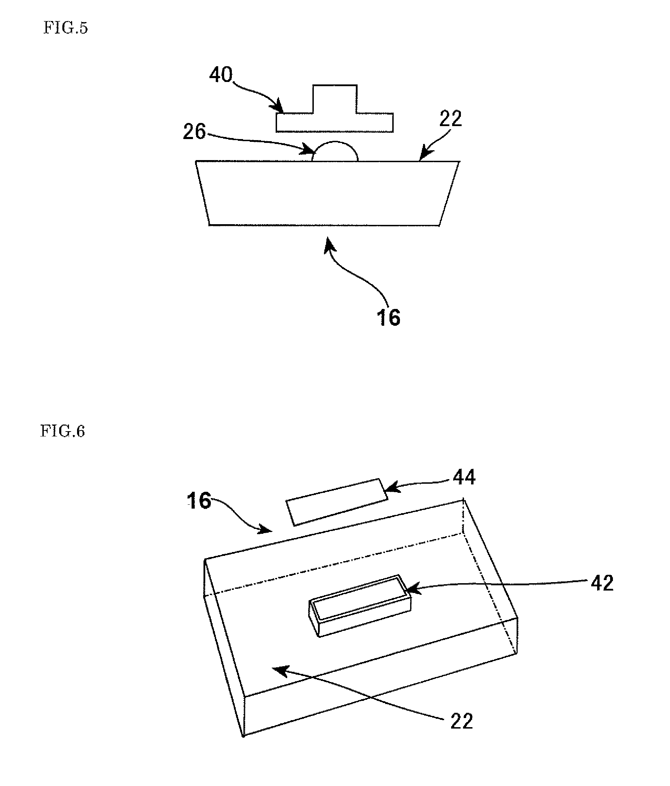

Formerly, preparation for measurement such as making a cell for holding the specimen was needed. According to the present invention, the specimen can be held very easily, and the workload on the observer is reduced.
The gel-type specimen 26 is placed at the incident position of the light 28 to the specimen mounting face 22 by pressing it into close contact with the specimen mounting face 22 using a specimen pressing mold 40, as shown in Fig. 5.

A liquid specimen such as a strong solution or a colloidal solution is placed by pouring it into a rectangular specimen holding mold 42 disposed on the specimen mounting face 22 of the prism 16, as shown in Fig. 6. Then, a lid 44 is placed on the specimen holding mold 42 to prevent the liquid specimen from evaporating.

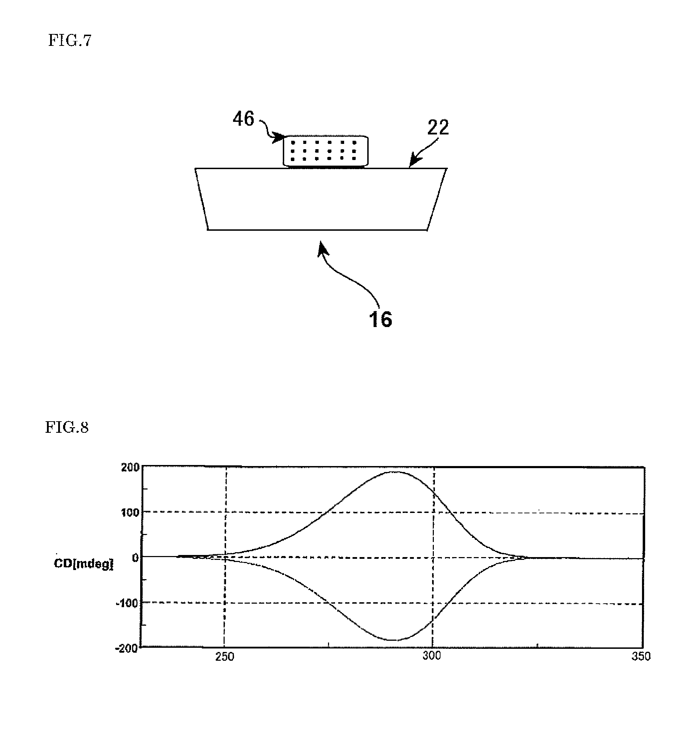

A liquid specimen may also be placed not by using the mold but by placing a sponge 46 saturated with the liquid specimen on the specimen mounting face 22 of the prism 16, as shown in Fig. 7.

A cream-type specimen such as a viscous liquid is placed on the specimen mounting face 22 of the prism 16 by applying it directly thereto.

### EXAMPLES

Comparison of circular dichroism (CD) spectra obtained by conventional method and method of the present invention
Formerly, when a sample with a very high concentration was measured, the specimen was diluted before its CD spectrum was measured. A method according to the present invention allows the specimen to be measured directly.
To verify the practicality of the method of the present invention, CD spectra obtained by the conventional method and the method of the present invention were compared. The d-form and 1-form of 10-camphorsulfonic acid (CSA) were used as the specimen. The CD spectra of CSA were obtained by using a very strong solution (1.85 g/ml) in the method according to the present invention and by using a diluted solution (0.0006 g/ml) in the conventional method.
The same detector settings, such as sensitivity, were used.

The CD spectra of 10-CSA obtained in the conventional method, shown in Fig. 8, indicate that the d-form exhibits a positive Cotton effect with a peak at 290 nm, and the 1-form exhibits a negative Cotton effect with a peak at 290 nm.

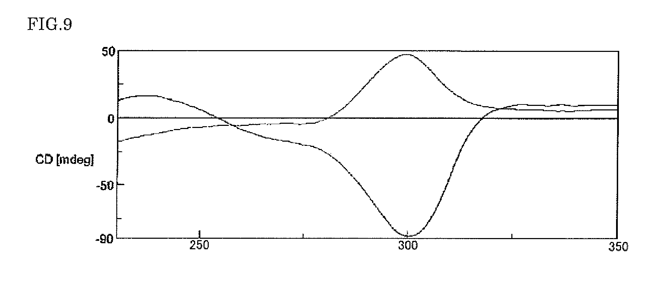

The CD spectra of 10-CSA obtained in the method according to the present invention, shown in Fig. 9, indicate that the d-form exhibits a positive Cotton effect with a peak at 300 nm, and the 1-form exhibits a negative Cotton effect with a peak at 300 nm.

The peaks appearing in almost the same position indicate that chirality of CSA was measured.
With the method according to the present invention, a CD spectrum can be obtained even from a very strong solution.

As described in the embodiment, it is clear that the spectrum obtained according to the present invention is affected by the chirality of CSA. The spectrum has almost the same shape as the spectrum obtained by the conventional method.
Although the peak positions are slightly different, the CD spectra obtained by the method according to the present invention have almost the same features as the CD spectra obtained by the conventional method. Therefore, it was concluded that, with some corrections, the method of the present invention is suited to practical use.

## Claims

1. A circular dichroism spectrophotometry apparatus for measuring a circular dichroism spectrum by plotting the difference in absorbance between right-handed and left-handed circularly polarized light with respect to wavelength, the circular dichroism spectrophotometry apparatus comprising:
a light source for emitting light;
a monochromator for producing light having a predetermined wavelength from the light;
a polarizer for producing linearly polarized light from light passing through the monochromator;
a wave plate for converting light passing through the polarizer to right-handed or left-handed circularly polarized light;
a prism having an entrance face through which light passing through the wave plate enters, a specimen mounting face on which a specimen is placed in close contact with the prism, and an exit face from which light reflected from the specimen mounting face goes out; and
a light receiving element for receiving light leaving the exit face of the prism;
wherein the light passing through the polarizer enters the prism through the entrance face, and then hits the specimen mounting face at an angle greater than or equal to the critical angle.

2. A circular dichroism spectrophotometry apparatus according to Claim 1, wherein light entering the prism through the entrance face hits the specimen mounting face at an angle ranging from 70° to 89°.

3. A circular dichroism spectrophotometry apparatus according to Claim 1, wherein the prism is used in a tilted position such that, when the light passing through the polarizer enters the prism, the angle between the vibration direction of p-polarized light and the specimen mounting face becomes equal to the angle between the vibration direction of s-polarized light and the specimen mounting face.

4. A circular dichroism spectrophotometry apparatus according to Claim 1, wherein the prism is used in a tilted position such that the light passing through the polarizer enters the prism perpendicularly through the entrance face.

5. A circular dichroism spectrophotometric method for measuring a circular dichroism spectrum by plotting the difference in absorbance between right-handed and left-handed circularly polarized light with respect to wavelength, the circular dichroism spectrophotometric method comprising the steps of:
placing a specimen on a specimen mounting face of a prism; and
producing light having a predetermined wavelength by a monochromator from light emitted from a light source, producing linearly polarized light by a polarizer from light passing through the monochromator, converting light passing through the polarizer to right-handed or left-handed circularly polarized light by a wave plate, making light passing through the wave plate enter the prism through an entrance face of the prism and hit the specimen mounting face at an angle greater than or equal to the critical angle, making light reflected from the specimen mounting face go out of the prism through an exit face, and detecting outgoing light by a light receiving element to measure a circular dichroism spectrum.

6. A circular dichroism spectrophotometric method according to Claim 5, wherein light entering the prism through the entrance face hits the specimen mounting face at an angle ranging from 70° to 89°.

7. A circular dichroism spectrophotometric method according to Claim 5, wherein the prism is used in a tilted position such that, when the light passing through the polarizer enters the prism, the angle between the vibration direction of p-polarized light and the specimen mounting face becomes equal to the angle between the vibration direction of s-polarized light and the specimen mounting face.

8. A circular dichroism spectrophotometric method according to Claim 5, wherein the prism is used in a tilted position such that the light passing through the polarizer enters the prism perpendicularly through the entrance face.
